# FASCICULE DE BREVET EUROPEEN

(11) **EP 0 493 257 B1**
(45) Date de publication et mention de la délivrance du brevet: **20.03.1996**
(21) Numéro de dépôt: 91403542.3
(22) Date de dépôt: 26.12.1991
(51) Int. Cl.: F21V 8/00

(54) **Projecteur de véhicule automobile à moyens de conduction de lumière**
KFZ-Scheinwerfer mit Lichtleitern
Headlight for vehicles using lightguides

(30) Priorité: 27.12.1990 FR 9016323; 27.12.1990 FR 9016324
(43) Date de publication de la demande: 01.07.1992
(73) Titulaire: VALEO VISION, F-93012 Bobigny Cédex (FR)
(72) Inventeur: Brun, Norbert, F-77600 Guermantes (FR)
(74) Mandataire: Martin, Jean-Jacques

(56) Documents cités:
- DE-A- 3 142 131
- DE-A- 3 330 247
- DE-C- 3 907 072
- US-A- 4 811 172

## Description

La présente invention concerne d'une façon générale les projecteurs de véhicules automobiles, et plus particulièrement un projecteur équipé, entre sa source et la sortie du faisceau lumineux, de moyens de conduction de lumière.

On connaît déjà, par exemple par FR-A-2 514 105 ou FR-A-2 472 135, un projecteur conforme au préambule de la revendication 1 qui comprend une source telle qu'une lampe à filament, un réflecteur du genre ellipsoïdal au premier foyer duquel est placée la source et dans la région du second foyer duquel est placé un bord d'entrée d'un barreau de verre. La coupure est formée dans le premier cas par un écran placé à proximité dudit bord d'entrée, et dans le second cas par une conception spéciale de la glace, divisée en pavés élémentaires auxquels aboutissent des subdivisions du barreau de verre.

Dans le premier cas, on observe une perte en flux importante du fait de la présence de l'écran. Dans le second cas, la formation du faisceau nécessite un conducteur de lumière et une glace de conceptions complexes et onéreuses.

La présente invention vise à proposer une nouvelle solution pour former un faisceau de photométrie prédéterminée dans un projecteur du type précité.

Plus précisément, l'invention vise à proposer un projecteur dans lequel, sans prévoir d'écran d'occultation, toujours à l'origine d'une perte d'une partie du flux émis par la source, et sans prévoir de glace de conception spéciale et coûteuse, on puisse former très facilement un faisceau satisfaisant à des critères photométriques déterminés, notamment à une coupure, le projecteur conservant par ailleurs tous les avantages des projecteurs à conducteurs de lumière, notamment en matière de souplesse d'implantation dans un véhicule.

Elle concerne à cet effet un projecteur de véhicule automobile, selon la revendication 1.

On connaît aussi depuis longuement un projecteur selon le préambule de la revendication 9 et l'invention se propose également d'améliorer la souplesse d'installation de ce type de projecteur dans un véhicule.

Ainsi, l'invention concerne un projecteur de véhicule automobile selon la revendication 9.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue schématique d'un projecteur conforme à la présente invention,
la figure 2 est une vue en coupe verticale axiale d'une partie du projecteur de la figure 1,
la figure 3 illustre schématiquement, en perspective, un exemple théorique d'évolution d'un faisceau groupé de fibres optiques d'un projecteur de la présente invention,
la figure 4 est une vue en perspective schématique du projecteur avec un premier type de lampe,
la figure 5 est une vue en perspective schématique du projecteur avec un second type de lampe,
la figure 6 illustre schématiquement, en perspective, un premier exemple concret d'évolution d'un faisceau groupé de fibres optiques d'un projecteur de l'invention,
la figure 7 illustre par une vue partielle à échelle agrandie une variante de réalisation du faiscau de fibres de la figure 6,
la figure 8 illustre schématiquement, en perspective, un deuxième exemple concret d'évolution d'un faisceau groupé de fibres optiques d'un projecteur de l'invention,
la figure 9 illustre schématiquement, en perspective, un troisième exemple concret d'évolution d'un faisceau groupé de fibres optiques d'un projecteur de l'invention,
la figure 10 est une vue en perspective de détail d'une forme d'exécution pratique possible pour le faisceau de la figure 9,
la figure 11 est une vue en perspective schématique d'une variante de réalisation d'un projecteur de l'invention,
la figure 12 est une vue en perspective d'une partie du projecteur de la figure 11,
la figure 13 illustre schématiquement un écran de projection européen normalisé à 25 mètres, avec une image d'une source virtuelle du projecteur de la figure 11,
la figure 14 illustre en vue de face un mode de réalisation particulier d'une face d'extrémité de faisceau groupé de fibres optiques selon la présente invention, et
la figure 15 illustre en vue de profil un mode de réalisation particulier d'une face d'extrémité de faisceau groupé de fibres optiques selon la présente invention.

On notera préliminairement que, d'une figure à l'autre, des éléments ou parties identiques ou similaires ont été désignés par les mêmes signes de référence.

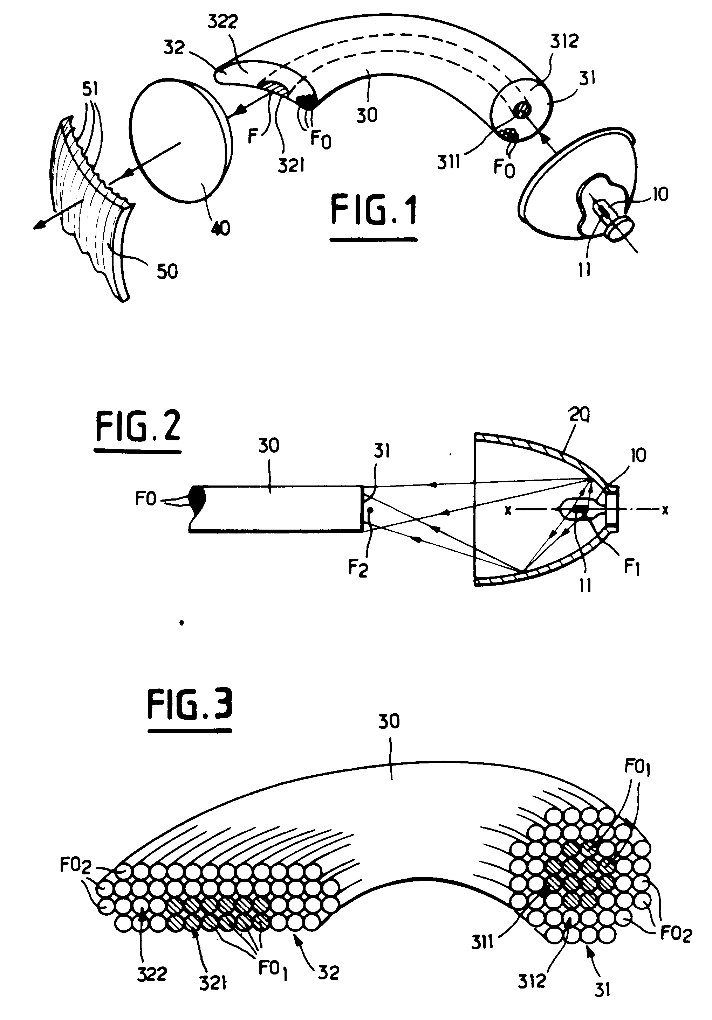

En référence tout d'abord aux figures 1 et 2, un projecteur de véhicule automobile selon la présente invention comprend une source lumineuse 10, telle qu'une lampe normalisée à filament 11, un réflecteur du genre ellipsoïdal 20, à un premier foyer F1 duquel est placée la source, et formant récupérateur du flux lumineux émis par la source 10.

En 30 est indiqué un faisceau groupé de fibres optiques FO. Une face d'entrée 31 du faisceau 30, contenant les embouts d'entrée des fibres individuelles, est située dans un plan perpendiculaire à l'axe optique xx du réflecteur 20 et passant au voisinage du second foyer F2 dudit réflecteur 20, de telle manière que pratiquement la totalité des rayons lumineux issus du réflecteur 20 soient incidents sur ladite face.

Le faisceau 30 peut suivre dans le véhicule tout trajet souhaité, en étant conformé de façon approprié lors du regroupement des fibres optiques individuelles. Cela permet notamment de positionner la source lumineuse en un emplacement quelconque du véhicule, si nécessaire à distance de sa région frontale, pour ainsi minimiser l'espace nécessaire dans cette région.

On trouve en outre un dispositif de projection, en l'espèce sous la forme d'une lentille plan-convexe 40. Une face de sortie 32 du faisceau de fibres optiques, contenant les embouts de sortie des fibres individuelles, est située dans un plan essentiellement perpendiculaire à l'axe principal A de la lentille 40 et passant au voisinage du foyer objet F de la lentille.

Enfin le projecteur comprend une glace de fermeture 50, qui est placée en avant de la lentille 40 et qui comporte par exemple des stries verticales 51 pour l'étalement du faisceau formé en direction horizontale.

Selon un aspect essentiel de l'invention, l'utilisation d'un faisceau groupé de fibres optiques 30 comme moyen de transmission de la lumière entre la source 10 et la sortie du faisceau (glace 50) permet de conserver la répartition d'éclairement telle que fournie par le réflecteur 20. Ainsi, comme on l'a indiqué schématiquement sur la figure 1, l'ensemble lampe/réflecteur applique à la face d'entrée 31 du faisceau de fibres optiques une quantité de lumière qui est supérieure dans la zone centrale de la face (zone hachurée) 311 à la quantité reçue par la zone périphérique (zone non hachurée 312).

Grâce au fait que chaque fibre, par nature, restitue à sa sortie la quantité de lumière appliquée à son entrée, la présente invention permet donc de retrouver au niveau de la face de sortie 32 un échantillonnage de lumière analogue, c'est-à-dire avec des fibres qui restituent plus de lumière que d'autres, ce qui s'avère tout à fait intéressant dans le cas des projecteurs. En effet les faisceaux lumineux d'éclairage doivent classiquement comporter une tache de concentration lumineuse, généralement centrale, pour la portée du faisceau, et une zone d'éclairement moins élevé mais d'étendue plus large, pour le confort visuel du conducteur.

Par opposition, un simple barreau de verre ou analogue, dont l'utilisation s'avère appropriée pour des fonctions lumineuses de signalisation, provoque inévitablement une perte de l'information de répartition d'éclairement recueillie au niveau de sa face d'entrée, car on assiste en son sein à un mélange de tous les rayons appliqués à l'entrée.

Par nature, pour des fibres optiques de section circulaire constante, l'angle solide d'ouverture du rayonnement incident sur chaque fibre à l'entrée 31 du faisceau 30 est égal à l'angle solide d'ouverture du rayonnement émanant de l'extrémité opposée de la fibre. Les caractéristiques de la lentille 40, et en particulier son diamètre et sa focale, sont choisies en fonction de cet angle solide, de manière que l'ensemble du rayonnement émanant de chaque fibre vienne frapper la lentille.

Selon un mode de réalisation de base, non illustré, le faisceau 30 de fibres optiques peut présenter une section constante entre son entrée et sa sortie. On retrouve donc au niveau de la face de sortie, comme on le comprendra mieux dans la suite de la description, un motif lumineux circulaire comportant une zone centrale de forte concentration et une zone péhiphérique d'éclairement moindre. Ainsi, par exemple à l'aide de la seule intervention des stries 51 de la glace en aval de la lentille, on peut obtenir un faisceau de route comportant une tache de concentration centrale et une zone périphérique d'éclairement moindre.

Selon un autre aspect de la présente invention, on peut utiliser le faisceau de fibres optiques 30 pour transformer la répartition lumineuse obtenue au niveau de sa face d'entrée en une répartition lumineuse différente, et très avantageusement en une répartition lumineuse correspondant à la photométrie du faisceau à former.

Dans ce cas, la lentille de projection 40 permet, sans qu'il soit nécessaire d'y associer des éléments de conformation de faisceau (écrans ou analogues) de projeter directement sur la route, à travers la glace 50 qui peut être conçue pour donner un étalement en largeur, le faisceau tel qu'il est formé à la face de sortie du faisceau de fibres optiques 30.

Ainsi on a représenté sur la figure 1 une face de sortie 32 dont la forme et la répartition lumineuse correspondent, à une homothétie près et retournement sens dessus-dessous et gauche-droite pour contrebalancer l'inversion effectuée de façon inhérente par la lentille 40, à un faisceau de croisement normalisé conforme aux règlements européens, alors que la forme de la face d'entrée est circulaire avec une zone de concentration 311 située centralement.

La conversion entre le motif d'éclairement reçu au niveau de la face 31 et le motif d'éclairement à projeter via la lentille 40 au niveau de la face 32 s'effectue en modifiant l'organisation et la répartition des fibres à mesure de leur progression dans le faisceau 30 entre les faces d'entrée et de sortie 31 et 32.

La figure 3 illustre un exemple théorique de transposition. Les douze fibres optiques FO1 situées dans la zone de concentration centrale 311 de la face d'entrée 31 se retrouvent dans ce cas dans une zone de concentration 321 de la face de sortie qui est étalée en largeur et qui occupe la région inférieure de ladite face. Dans le même temps, les quarante fibres optiques FO2 situées dans la zone périphérique 312, recevant moins de lumière, de la face d'entrée 31, sont réparties autour de la zone de concentration étalée 321, latéralement et au-dessus d'elle, de manière à définir une zone agrandie de moindre éclairement, propre à donner le confort visuel.

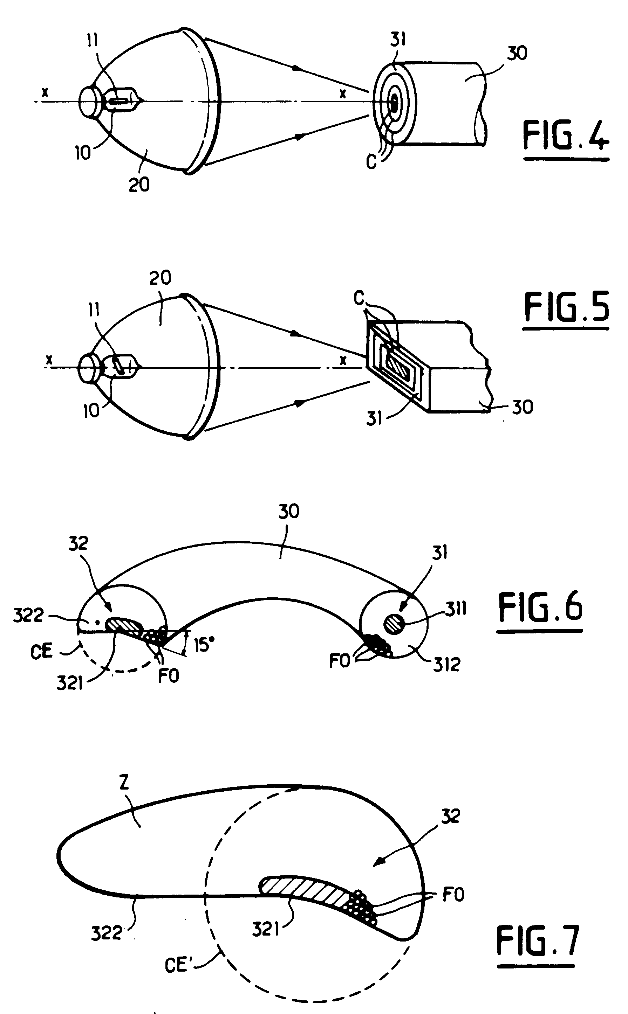

On a représenté sur les figures 4 et 5 deux formes de faces d'entrée possibles, en fonction du type de lampe utilisé. Dans le cas de la figure 4, le filament 11 est axial, si bien que, pour recueillir le maximum de lumière après réflexion par le miroir ellipsoïdal 20, la face 31 est circulaire.

Dans le cas de la figure 5, la lampe 10 comporte un filament transversal 11, orienté horizontalement. Dans ce cas, la majorité de la lumière réfléchie par le miroir 20 va être inscrite dans un rectangle, et la face 31 est ici conformée de façon correspondante.

On observe sur la surface des faces 31 des figures 4 et 5 des courbes isolux C, de valeurs décroissantes de l'intérieur vers l'extérieur, représentatives du fait que la quantité de lumière reçue de l'ellipsoïde par la face 31 décroît progressivement de l'intérieur vers l'extérieur.

Ainsi dans les deux cas, et plus généralement avec tout moyen récupérateur de flux associé à une source de type quelconque, on observe que certaines fibres optiques reçoivent davantage de lumière que d'autres, à section égale.

La figure 6 illustre en détail un premier exemple concret de la modification de la répartition des fibres FO dans le faisceau de fibres 30 entre l'entrée et la sortie. La face 31 est ici circulaire (cas d'une source axiale). La position des fibres individuelles dans le faisceau 30 est déplacée progressivement entre la face d'entrée 31 et la face de sortie 32 de manière à ce que le motif lumineux au niveau de ce dernier corresponde au faisceau formé typiquement par un réflecteur parabolique associé à un filament à coupelle d'occultation pour former un faisceau de croisement.

On peut rappeler ici qu'un tel faisceau de croisement est caractérisé par deux demi-coupures, l'une horizontale et l'autre inclinée à 15° au-dessus de l'horizontale, et par une tache de concentration située juste au-dessous de la coupure, à la réunion des deux demi-coupures.

On observe sur la figure 6 que le motif lumineux de la face 32, en vue de face, est retourné sens dessus-dessous et gauche-droite. De cette manière, après l'inversion d'image créée classiquement par une lentille telle que la lentille 40 décrite plus haut, sera projeté sur la route un faisceau dont la coupure est correctement positionnée par rapport aux exigences règlementaires.

Avec des fibres optiques FO dont la section reste constante, on comprend que les surfaces utiles des faces 31 et 32 sont identiques. Ainsi, dans le cas où la face 31 a la forme d'un cercle de diamètre D1, la face 32 peut par exemple être inscrite dans un cercle (noté CE) de diamètre D2 supérieur à D1, et calculé aisément en fonction de l'angle (typiquement de 15°) de relèvement de la coupure.

La figure 7 représente une variante de la face 32, dans laquelle la modification de la répartition des fibres optiques FO dans le faisceau 30 s'est effectuée pour l'essentiel en décalant les fibres situées dans la région inférieure du cercle CE′ (correspondant au contour de la face d'entrée 31) pour les amener latéralement par rapport à ce cercle, dans une zone Z, de manière à obtenir un faisceau élargi, tel qu'illustré. On minimise ainsi le travail d'étalement latéral que doit normalement effectuer la glace 50.

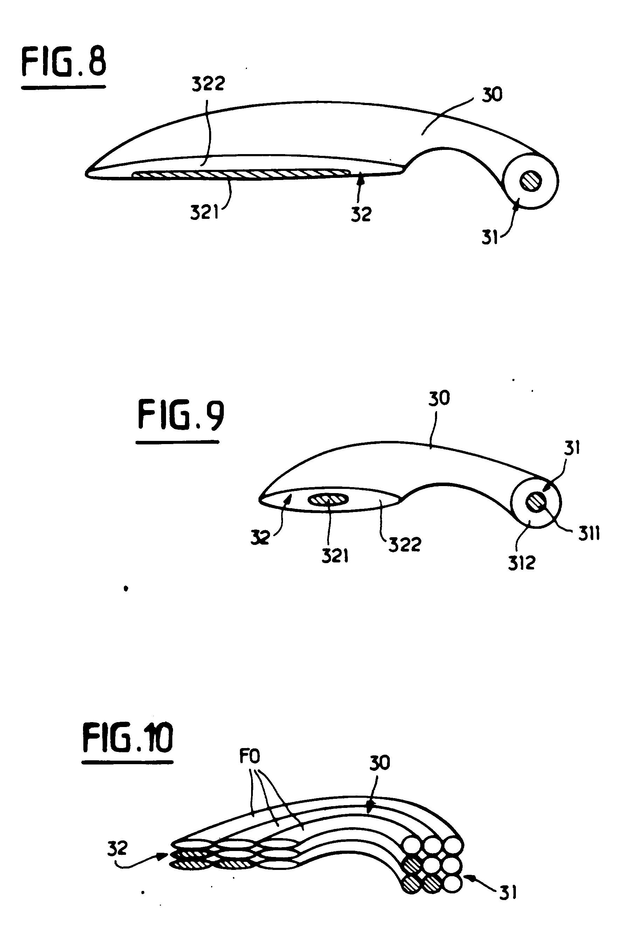

La figure 8 illustre la forme du faisceau de fibres optiques 30 dans le cas où on souhaite former un faisceau antibrouillard. On observe au niveau de la face 32 un étalement important en largeur, et la répartition du motif lumineux en une zone de forte concentration 321, située au-dessus d'une ligne horizontale qui définira une coupure du faisceau, et une zone de concentration moindre 322, donnant au faisceau lumineux sa pleine largeur de part et d'autre de la zone 321 et sa pleine hauteur au-dessus de ladite zone 321.

De cette manière, après inversion par la lentille 40, on obtient un faisceau anti-brouillard conforme aux règlements, qui ne nécessite pratiquement aucun étalement supplémentaire par la glace.

La figure 9 illustre le cas d'un faisceau de route. On observe au niveau de la face de sortie 32 un motif lumineux essentiellement ovoïde ou elliptique, avec une tache de concentration centrale 321 et une zone de moindre concentration 322.

Dans toute la description qui précède, on a supposé que les fibres optiques individuelles FO étaient des fibres de section circulaire constante sur toute leur longueur.

En variante, et maintenant en référence à la figure 10, on peut prévoir que les fibres optiques soient chacune à section de contour et/ou de superficie variable. Dans l'exemple illustré, la superficie est constante mais le contour passe progressivement, de la face d'entrée vers la face de sortie, d'une forme circulaire à une forme ovoïde ou elliptique aplatie.

De cette manière, la largeur du motif lumineux, qui donnera la largeur du faisceau effectivement formé, est obtenue sans avoir à bouleverser la répartition des fibres individuelles dans le faisceau 30. En particulier, dans le cas d'un faisceau lumineux de route tel qu'illustré sur la figure 9, le motif lumineux désiré peut, avec les fibres individuelles à contour évolutif que l'on vient juste de décrire, être obtenu sans avoir à modifier la répartition des fibres FO dans le faisceau 30.

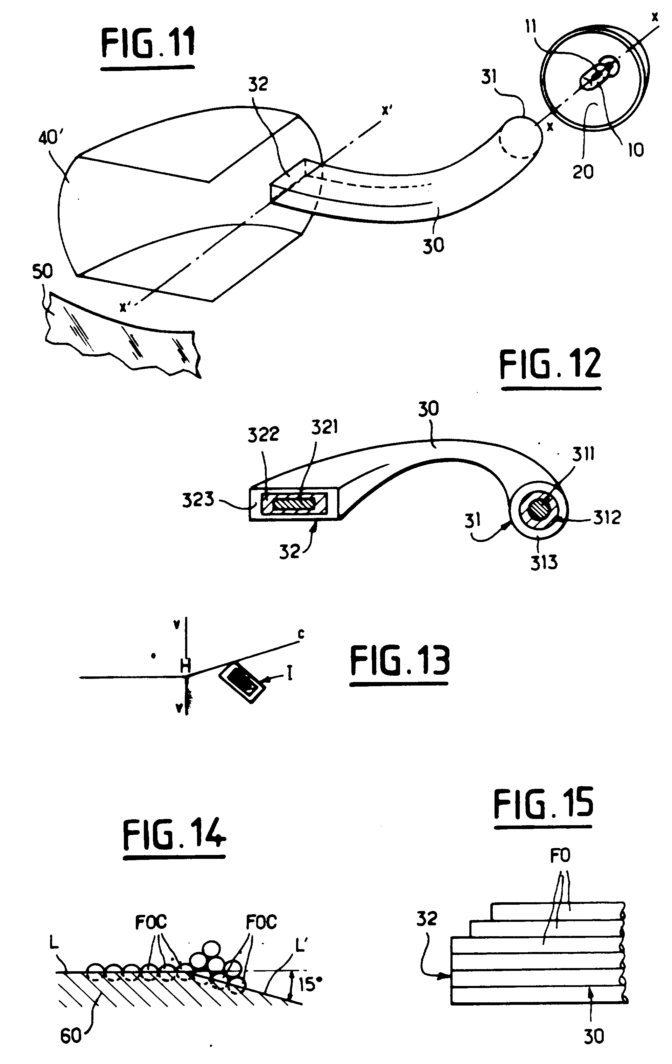

On va maintenant décrire en référence à la figure 11 un projecteur selon un second mode de réalisation de la présente invention.

On trouve ici, comme dans le cas de la figure 1, une source lumineuse 10, 11, un récupérateur de flux 20 sous la forme préférentielle d'un réflecteur du genre ellipsoïdal, et un faisceau 30 de fibres optiques FO.

Cependant, dans ce cas, le faisceau 30 est destiné, par modification de la répartition des fibres entre la face d'entrée 31 et la face de sortie 32, à former au niveau de ce dernier une source lumineuse virtuelle dont les contours et la répartition de la lumière en son sein sont bien déterminés, cette source virtuelle étant utilisée en coopération avec un élément optique tel qu'un demi-réflecteur 40′ pour engendrer le faisceau souhaité.

Plus précisément, et maintenant en référence à la fois aux figures 11 et 12, on observe que le faisceau de fibres 30 passe progressivement d'un contour circulaire (face 31), adapté au couple source axiale/réflecteur ellipsoïdal, à un contour rectangulaire (face 32), censé reproduire, vu du réflecteur 40′, le contour d'un filament axial disposé tangentiellement à l'axe optique x′x′ du réflecteur 40′, au-dessous de celui-ci. A des fins d'illustration, on a représenté sur la face d'entrée 31 une zone de concentration maximale 311, une zone de concentration moyenne 312 et une zone de faible concentration 313. De préférence, comme le montre la figure 12, les zones d'éclairements différents homologues 321, 322 et 323 sont essentiellement concentriques dans le contour de la face de sortie 32.

On définit ainsi une source lumineuse virtuelle dont les bords sont droits et nets. Ainsi une image de la source virtuelle produite par le réflecteur 40′, par exemple l'image I représentée sur la figure 13, a son extrémité supérieure alignée avec une bonne précision avec la coupure à définir, par exemple sur la ligne de coupure européenne normalisée hHc, et, en combinaison avec les autres images produites, va pouvoir engendrer un faisceau coupé dont la coupure est particulièrement bien définie.

Le réflecteur 40 peut être de tout type approprié. par exemple, pour engendrer un faisceau de croisement aux normes européennes, on peut utiliser un réflecteur tel que défini notamment dans le brevet FR-A-2 536 502 ou FR-A-2 599 121 au nom de la demanderesse, les contenus de ces documents étant incorporés ici par référence. On rappellera ici que ce type de surface est capable, en soi, de positionner les images d'une source lumineuse dans le plan de projection de manière à définir un faisceau coupé conforme aux règlements européens.

Aussi bien dans le mode de réalisation de la figure 1 que dans celui de la figure 11, dans le cas où au moins un bord du motif lumineux engendré au niveau de la seconde face 32 du faisceau de fibres 30 doit présenter une netteté parfaite le long d'un bord (par exemple le bord définissant une coupure de faisceau lumineux dans le cas de la figure 1), on peut faire appel à la variante de réalisation représentée sur la figure 14. Selon cette variante, un cache ou écran d'occultation 60 est prévu pour masquer la moitié, ou approximativement la moitié, de chaque fibre optique FOC adjacente à la coupure. Plus précisément, dans le cas illustré d'un faisceau de croisement européen dont on a défini la coupure plus haut, le cache 60 peut comporter un premier bord horizontal L passant diamétralement au niveau de l'embout de chaque fibre FOC participant à la définition de la demi-coupure horizontale, et un second bord L′, incliné par exemple de 15° vers le bas par rapport au bord L, passant diamétralement au niveau de l'embout de chaque fibre FOC participant à la définition de la demi-coupure inclinée.

On notera ici que la cache 60 n'est pas un cache de formation de coupure tel qu'on l'entend habituellement. En fait, la coupure est bien engendrée par la face de sortie 32 elle-même, le cache 60 se bornant à améliorer si nécessaire la définition de ladite coupure.

Par ailleurs, on peut souhaiter dans certains cas que le faisceau lumineux, à l'opposé de la coupure (c'est-à-dire éclairant la route le plus près du véhicule), présente une limite floue, c'est-à-dire qu'il n'existe pas dans cette région de transition excessivement nette entre le faisceau et l'obscurité environnante.

A cet effet, et maintenant en référence à la figure 15, on peut prévoir que les fibres optiques FO situées à l'opposé de la coupure, c'est-à-dire les fibres les plus hautes au niveau de l'extrémité 32 du faisceau de fibres 30, soient défocalisées (par rapport au plan passant par le foyer objet de la lentille 40). On observe concrètement sur la figure 15 que ces fibres les plus hautes sont progressivement raccourcies par rapport aux autres fibres. De cette manière on assure une dispersion angulaire plus importante du rayonnement lumineux émanant de ces fibres, pour obtenir l'effet de flou recherché.

Bien entendu, la présente invention n'est nullement limitée à la forme de réalisation décrite ci-dessus et représentée sur les dessins, mais l'homme de l'art saura y apporter toute variante ou modification conforme à son esprit.

En particulier, l'invention peut être utilisée avec des sources lumineuses de types et de positionnements quelconques notamment des lampes à filament ou encore des lampes à décharge. Dans ce dernier cas, la présente invention est particulièrement avantageuse en ce qu'elle permet d'éliminer sans disposition auxiliaire les rayons parasites, c'est-à-dire éloignés d'une géométrie d'émission définie, engendrés par ce type de lampe.

Par ailleurs, le récupérateur de flux constitué dans la description ci-dessus par un réflecteur du genre ellipsoïdal, peut être formé par tout autre type de moyen optique. Concrètement, un réflecteur ellipsoïdal ou assimilé permet de récupérer environ 95% du flux lumineux émis par la source.

## Revendications

1. Projecteur de véhicule automobile, du type comprenant :
- une source lumineuse (11),
- un moyen de récupération de flux (20) associé à la source,
- des moyens conducteurs de lumière (30) dont une extrémité d'entrée reçoit directement la lumière dudit moyen récupération de flux, et
- un moyen (40) de projection associé à une extrémité de sortie (32) des moyens conducteurs de lumière,
caractérisé en ce que les moyens conducteurs de lumière comprennent un faisceau groupé (30) de fibres optiques (FO), et en ce que la disposition géométrique des fibres dans la section du faisceau de fibres varie entre ladite extrémité d'entrée (31) et ladite extrémité de sortie (32) de manière à définir, au niveau de cette dernière, un motif lumineux présentant au moins une partie de contour nette, le projecteur engendrant ainsi un faisceau lumineux délimité par une coupure obtenue à partir de ladite partie de contour nette.

2. Projecteur selon la revendication 1, caractérisé en ce que la quantité de lumière reçue par les fibres optiques (FO) au niveau de leur embout d'entrée respectif varie en fonction de leur position et en ce que les embouts de sortie des fibres optiques sont répartis sur la face de sortie de manière à définir différents niveaux d'éclairement adaptés à la photométrie du faisceau à engendrer.

3. Projecteur selon la revendication 2, caractérisé en ce que le motif lumineux comporte une zone de forte concentration (321) définie par la juxtaposition des fibres optiques qui reçoivent au niveau de leur embout d'entrée respectif la plus grande quantité de lumière.

4. Projecteur selon l'une des revendications 1 à 3, caractérisé en ce que la zone de forte concentration (321) du motif lumineux est adjacente à la partie de contour nette du motif lumineux.

5. Projecteur selon l'une des revendications 1 à 4, caractérisé en ce que la variation de la disposition géométrique des fibres optiques (FO) dans le faisceau (30) est obtenue au moins partiellement par une évolution de la section des fibres optiques individuelles de leur embout d'entrée vers leur embout de sortie (32).

6. Projecteur selon l'une des revendications 1 à 5, caractérisé en ce qu'il est prévu un écran (60) dont un bord passe diamétralement au droit des fibres optiques adjacentes à ladite partie de contour nette du motif lumineux.

7. Projecteur selon l'une des revendications 1 à 6, caractérisé en ce que des fibres optiques situées à l'opposé de ladite partie de contour nette du motif lumineux sont conçues pour provoquer une diffusion de la lumière à travers le moyen de projection (40).

8. Projecteur selon l'une des revendications 1 à 7, caractérisé en ce que le moyen de projection comprend une lentille (40) dont un foyer objet (F) est situé au voisinage d'un plan passant par la face de sortie (32).

9. Projecteur de véhicule automobile du type comprenant :
- une source lumineuse (11) et un réflecteur (40') destinés à former un faisceau lumineux, aini qu'une glace de fermeture (50),
caractérisé en ce qu'il comprend en outre :
- un moyen de récupération de flux (20) associé à ladite source,
- un faisceau groupé (30) de fibres optiques (FO) dont un embout d'entrée de chacune reçoit la lumière dudit moyen de récupération de flux, la disposition géométrique des fibres dans la section du faisceau de fibres variant entre une face d'entrée (31) et une face de sortie (32) de manière à définir, au niveau de cette dernière, un motif lumineux correspondant à une source lumineuse virtuelle,
et en ce que le réflecteur (40') coopère avec ladite source lumineuse virtuelle.

10. Projecteur selon la revendication 9, caractérisé en ce que la face de sortie (32) présente un contour essentiellement rectangulaire.

11. Projecteur selon la revendication 10, caractérisé en qu'il est prévu dans la face de sortie une zone de forte concentration (321) de forme essentiellement rectangulaire, disposée le long d'un grand bord dudit contour.

12. Projecteur selon l'une des revendications 10 et 11, caractérisé en ce que la face de sortie est disposée dans un plan vertical passant par un axe optique (x'x') du réflecteur (40'), et en ce que ledit réflecteur est capable de positionner par lui-mêmme les iages de la source virtuelle pour former un faisceau de photométrie déterminée.

13. Projecteur selon l'une des revendications précédentes, caractérisé en ce que le moyen de récupération de flux comprend un réflecteur du genre ellipsoïdal (20), la source lumineuse étant placée au voisinage d'un premier foyer (F1) du réflecteur et la face d'entrée du faisceau de fibres optiques étant placée au voisinage d'un second foyer (F2) du réflecteur.

14. Projecteur selon la revendication 13, caractérisé en ce que la source (11) est allongée et disposée sensiblement sur le grand axe dudit réflecteur et en ce que le contour de la face d'entrée (31) est de forme générale circulaire.

15. Projecteur selon la revendication 13, caractérisé en ce que la source (11) est allongée et disposée sensiblement transversalement au grand axe dudit réflecteur et en ce que le contour de la face d'entrée (31) est de forme générale rectangulaire.

## Claims

1. A motor vehicle headlight of the type comprising:
a light source (11);
light flux recovery means (20) associated with the source;
light conductor means (30) having an inlet end directly receiving the light from said light flux recovery means; and
beam-projecting means (40) associated with an outlet end (32) of the light conductor means;
the headlight being characterized in that the light conductor means comprise a grouped bundle (30) of optical fibers (F0), and in that the geometrical disposition of the fibers in the section of the fiber bundle varies between said inlet end (31) and said outlet end (32) in such a manner as to define, at said outlet end, a light pattern having at least a portion with a sharp outline, the headlight thus generating a light beam that is defined by a cutoff obtained from said portion having a sharp outline.

2. A headlight according to claim 1, characterized in that the quantity of light received by the optical fibers (F0) at their respective inlet ends varies as a function of their positions, and in that the outlet ends of the optical fibers are distributed over the outlet face in such a manner as to define different levels of illumination that are adapted to the photometric criteria for the beam that is to be generated.

3. A headlight according to claim 2, characterized in that the light pattern includes a high concentration zone (321) defined by juxtaposed optical fibers which receive a greater quantity of light at their respective inlet ends.

4. A headlight according to any one fo claims 1 to 3, characterized in that the high concentration zone (321) of the light pattern is adjacent to the portion of the light pattern that has a sharp outline.

5. A headlight according to any one of claims 1 to 4, characterized in that the geometrical disposition of the optical fibers (F0) in the bundle (30) is caused to vary, at least in part, by the section of the individual optical fibers varying from their inlet ends to their outlet ends (32).

6. A headlight according to any one of claims 1 to 5, characterized in that a screen (60) is provided having an edge that passes diametrically across optical fibers adjacent to said sharp outline portion of the light pattern.

7. A headlight according to any one of claims 1 to 6, characterized in that the optical fibers situated remotely from the said portion of the light pattern that has a sharp outline are designed to cause light to be diffused through the beam-projecting means (40).

8. A headlight according to any one of claims 1 to 7, characterized in that the beam-projecting means comprise a lens (40) whose object focus (F) is situated close to a plane containing the outlet face (32).

9. A motor vehicle headlight of the type comprising:
a light source (11) and a reflector (40') designed to form a light beam, and also a closure glass (50),
the headlight being characterized in that it further comprises:
light flux recovery means (20) associated with said source; and
a grouped bundle (30) of optical fibers (F0) in which an inlet end of each fiber receives light from said light flux recovery means, the geometrical disposition of the fibers in the section of the bundle of fibers varying from an inlet face (31) to an outlet face (32) in such a manner as to define a light pattern in said outlet face that corresponds to a virtual light source;
and in that the reflector (40') co-operates with said virtual light source.

10. A headlight according to claim 9, characterized in that the outlet face (32) has an outline that is substantially rectangular.

11. A headlight according to claim 10, characterized in that an essentially rectangularly-shaped zone of high concentration (321) is provided in the outlet face, extending along a long edge of said outline.

12. A headlight according to claim 10 or 11, characterized in that the outlet face is disposed in a vertical plane including an optical axis (x'x') of the reflector (40'), and in that said reflector is capable on its own of positioning images of the virtual source so as to form a beam of determined photometric criteria.

13. A headlight according to any preceding claim, characterized in that the light flux recovery means comprise a reflector (20) of the ellipsoidal kind, the light source being placed in the vicinity of a first focus (F1) of the reflector and the inlet face of the bundle of optical fibers being placed in the vicinity of a second focus (F2) of the reflector.

14. A headlight according to claim 13, characterized in that the source (11) is elongate and disposed substantially on the long axis of said reflector, and in that the outline of the inlet face (31) is generally circular in shape.

15. A headlight according to claim 13, characterized in that the source (11) is elongate and disposed substantially transversely to the long axis of said reflector, and in that the outline of the inlet face (31) is generally rectangular in shape.

## Patentansprüche

1. Kraftfahrzeugscheinwerfer, bestehend aus:
- einer Lichtquelle (11),
- einer mit der Lichtquelle verbundenen Vorrichtung für die Aufnahme des Lichtstroms (20),
- Lichtleitern (30), die an einem Eintrittsende das Licht direkt aus der besagten Vorrichtung für die Aufnahme des Lichtstroms erhalten,
- einer Projektionsvorrichtung (40), die mit einem Austrittsende (32) der Lichtleiter verbunden ist,
**dadurch gekennzeichnet**, daß die Lichtleiter ein geordnetes Bündel (30) von Lichtleitfasern (FO) enthalten und daß sich die geometrische Anordnung der Fasern im Querschnitt des Faserbündels zwischen dem besagten Eintrittsende (31) und dem besagten Austrittsende (32) verändert, so daß im Bereich dieses Endes eine Lichtstruktur definiert wird, die mindestens einen scharfen Umrißteil aufweist, so daß der Scheinwerfer ein Lichtbündel erzeugt, das durch eine Hell-Dunkel-Grenze begrenzt wird, die durch diesen scharfen Umrißteil entsteht.

2. Scheinwerfer nach Anspruch 1 , **dadurch gekennzeichnet**, daß die Lichtmenge, die durch die Lichtleitfasern (FO) im Bereich ihrers jeweiligen Eintrittsendes aufgenommen wird, in Abhändigkeit von ihrer Position unterschiedlich ausfällt und daß die Austrittsenden der Lichtleitfasern auf der Austrittsseite so verteilt sind, daß sie verschiedene Beleuchtungsstärkestufen definieren, die auf die Photometrie des zu erzeugenden Lichtbündels abgestimmt sind.

3. Scheinwerfer nach Anspruch 2 , **dadurch gekennzeichnet**, daß die Lichtstruktur einen Bereich mit starker Konzentration (321) umfaßt, der durch die Aneinanderreihung der Lichtleichtfasern definiert ist, die an ihrem jeweiligen Eintrittsende die größte Lichtmenge erhalten.

4. Scheinwerfer nach einem der Ansprüche 1 bis 3, **dadurch gekennzeichnet**, daß der Bereich mit starker Konzentration (321) der Lichtstruktur an den scharfen Umrißteil der Lichtstruktur angrenzt.

5. Scheinwerfer nach einem der Ansprüche 1 bis 4, **dadurch gekennzeichnet**, daß die Veränderung der geometrischen Anordnung der Lichtleitfasern (FO) im Faserbündel (30) zumindest teilweise durch eine Änderung des Querschnitts der einzelnen Lichtleitfasern von ihrem Eintrittsende zu ihrem Austrittsende (32) erfolgt.

6. Scheinwerfer nach einem der Ansprüche 1 bis 5, **dadurch gekennzeichnet**, daß eine Abdeckblende (60) vorgesehen ist, von der eine Kante diametral in Höhe der Lichtleitfasern verläuft, die an den besagten scharfen Umrißteil der Lichtstruktur angrenzen.

7. Scheinwerfer nach einem der Ansprüche 1 bis 6, **dadurch gekennzeichnet**, daß die entgegengesetzt zu dem besagten scharfen Umrißteil der Lichtstruktur angeordneten Lichtleitfasern so gestaltet sind, daß sie eine Streuung des Lichts durch die Projektionsvorrichtung (40) bewirken.

8. Scheinwerfer nach einem der Ansprüche 1 bis 7, **dadurch gekennzeichnet**, daß die Projektionsvorrichtung eine Linse (40) umfaßt, von der ein Objektivbrennpunkt (F) in der Nähe einer Ebene angeordnet ist, die durch die Austrittsseite (32) hindurchgeht.

9. Kraftfahrzeugscheinwerfer, bestehend aus:
- einer Lichtquelle (11) und einem Reflektor (40') für die Bildung eines Lichtbündels sowie aus einer Streuscheibe (50),
**dadurch gekennzeichnet**, daß der außerdem die folgenden Bestandteile umfaßt:
- eine mit der besagten Lichtquelle verbundene Vorrichtung für die Aufnahme des Lichtstroms (20),
- ein geordnetes Bündel (30) von Lichtleitfasern (FO), die an einem Eintrittsende jeweils das Licht von der besagten Vorrichtung für die Aufnahme des Lichtstroms erhalten, wobei sich die geometrische Anordnung der Fasern im Querschnitt des Faserbündels zwischen einer Eintrittsseite (31) und einer Austrittsseite (32) so verändert, daß im Bereich dieser Austrittsseite eine Lichtstruktur gebildet wird, die einer virtuellen Lichtquelle entspricht,
und daß der Reflektor (40') mit der besagten virtuellen Lichtquelle zusammenwirkt.

10. Scheinwerfer nach Anspruch 9, **dadurch gekennzeichnet**, daß die Austrittsseite (32) einen in etwa rechteckigen Umriß aufweist.

11. Scheinwerfer nach Anspruch 10, **dadurch gekennzeichnet**, daß an der Austrittsseite ein Bereich mit starker Konzentration (321) mit einer in etwa rechteckigen Form vorgesehen ist, der entlang einer Längskante des besagten Umrisses angeordnet ist.

12. Scheinwerfer nach einem der Ansprüche 10 und 11, **dadurch gekennzeichnet**, daß die Austrittsseite in einer vertikalen Ebene angeordnet ist, die durch eine optische Achse (x'x') des Reflektors (40') hindurchgeht, und daß der besagte Reflektor in der Lage ist, selbsttätig die Bilder der virtuellen Lichtquelle so zu positionieren, daß ein Lichtbündel mit einer bestimmten Photometrie gebildet wird.

13. Scheinwerfer nach einem der vorangehenden Ansprüche , **dadurch gekennzeichnet**, daß die Vorrichtung für die Aufnahme des Lichtstroms einen Reflektor in Ellipsoidausführung (20) umfaßt, wobei die Lichtquelle in der Nähe eines ersten Brennpunktes (F1) des Reflektors angeordnet ist, während sich die Eintrittsseite des Lichtleitfaserbündels in der Nähe eines zweiten Brennpunktes (F2) des Reflektors befindet.

14. Scheinwerfer nach Anspruch 13, **dadurch gekennzeichnet**, daß die Lichtquelle (11) länglich ausgeführt und in etwa auf der Hauptachse des besagten Reflektors angeordnet ist und daß der Umriß der Eintrittsseite (31) eine allgemeine Kreisform aufweist.

15. Scheinwerfer nach Anspruch 13, **dadurch gekennzeichnet**, daß die Lichtquelle (11) länglich ausgeführt und in etwa quer zur Hauptachse des besagten Reflektors angeordnet ist und daß der Umriß der Eintrittsseite (31) eine allgemein rechteckige Form aufweist.
